# EUROPEAN PATENT APPLICATION

(11) **EP 1 809 010 A1**
(43) Date of publication of application: **18.07.2007**
(21) Application number: 04799468.6
(22) Date of filing: 02.11.2004
(51) Int. Cl.: H04M 3/00, H04M 11/00, H04L 12/66, H04Q 7/38

(54) **COMMUNICATION RELAY METHOD, COMMUNICATION RELAY PROGRAM AND COMMUNICATION RELAY APPARATUS**

(71) Applicant: Fujitsu Ltd., Kawasaki-shi, Kanagawa 211-8588 (JP)
(72) Inventor: FUKUTA, Shigeki, c/o Fujitsu Limited, Kawasaki-shi, Kanagawa 2118588 (JP); MORI, Shinichiro, c/o Fujitsu Limited, Kawasaki-shi, Kanagawa 2118588 (JP); FUJINO, Nobutsugu, c/o Fujitsu Limited, Kawasaki-shi, Kanagawa 2118588 (JP)
(74) Representative: Fenlon, Christine Lesley
(86) International application number: PCT/JP2004/016265
(87) International publication number: WO 2006/048925

(57) **Abstract**

As a result of a power saving technique for a portable dual terminal equipped with both WLAN unit and PHS unit, a call is usually relayed from an S-P gateway to a call receiver terminal via the PSTN, thereby incurring a call charge to the caller. According to the present invention, the call from the S-P gateway to the call receiver terminal (dual terminal) is terminated before a call charge is incurred, and the call receiver terminal calls back the S-P gateway via the IP network or the PSTN. The SIP server, instead of the call receiver terminal, identifies the caller terminal to call back, thereby connecting the call from the call receiver terminal to the caller terminal. In addition to this "callback method", the present invention further provides "reconnection method", "reconnection plus call-again method", and "call-again method", thus offering four types of methods.

## Description

### TECHNICAL FIELD

The present invention relates to a communication relay method, communication relay program, and communication relay apparatus for relaying communication between a first calling device and a second calling device.

### BACKGROUND ART

Commonly nowadays, a single user owns various information devices, such as a personal computer (PC), personal digital assistant (PDA), landline telephone, cellular phone, and personal handy-phone system (PHS), that are connected to a public switched telephone network (PSTN), internet protocol (IP) network, etc., and the user uses each device depending on task conditions, communication environment, etc. Although this situation enables the user to conduct affairs anytime and anywhere, without knowing the state of affairs of other users, the user may have difficulty in determining which information device is most appropriate to perform a particular task. For example, when the user wants to talk to another user immediately, the user does not know which device or communication method will enable contact with the other user in the smoothest way.

The applicant of the present invention has proposed "ubiquitous IP telephone system" (Japanese Patent Application No. 2004-079590), which, by a forwarding destination selection function of a "call forwarding server" (specifically, a session initiation protocol (SIP) server is presumed), forwards a call, reaching any one of the multiple of devices used by the user, to the most appropriate device at the time the call reaches the device". The system determines the forwarding destination of the call based on the present location of the user or a preset preference. For example, although a call is made to a particular phone number, the device to which the call is connected depends on the circumstances at the time of the call, and may be an extension telephone at the desk of a user when the user is at the desk or a cellular phone when the user is outside the office.

The applicant has also proposed a cellular phone type dual terminal (Japanese Patent Application No. 2004-199333) equipped with wireless communication devices including, for example, a PHS unit and a wireless local area network (WLAN) unit. In the following manner, this terminal keeps communication costs down by changing the communication device used and the network connected to depending on communication environment, etc.
- When the dual terminal is within a WLAN service area, the dual terminal connects to an IP network using the WLAN unit (generally, free of charge).
- When the dual terminal is outside the WLAN service area, the dual terminal connects to a PSTN using the PHS unit (generally, fee-based).

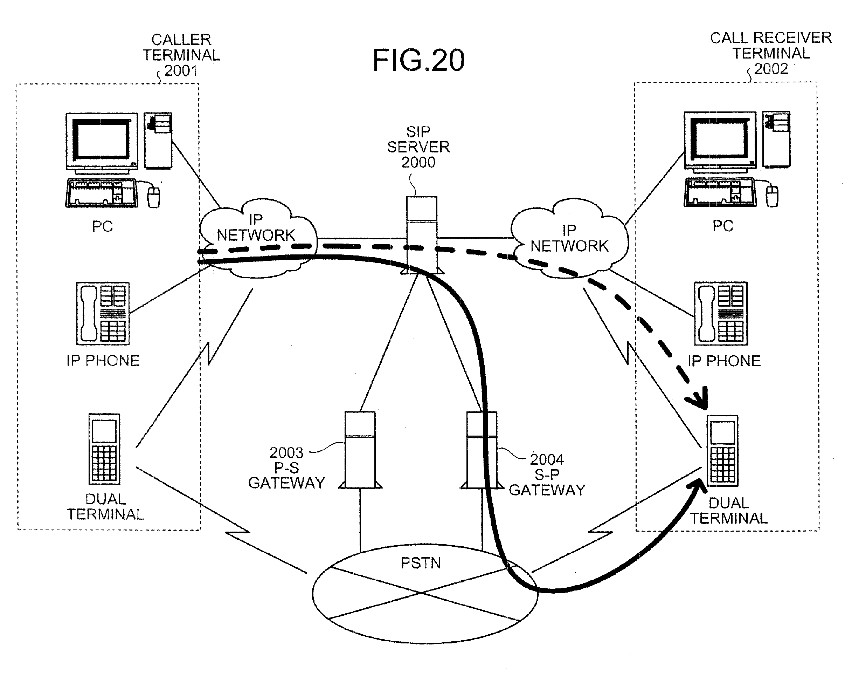

However, as shown in Fig. 20, with the above ubiquitous IP telephone system, when a call receiver terminal 2002 is such a dual terminal, a call from a caller terminal 2001 is connected to the call receiver terminal 2002 through a route represented by the solid line arrow and not a route represented by the dotted line arrow, i.e., via the PSTN even when the call is not initially made via the PSTN. Although a call routed along the dotted line arrow route does not generate a call charge, a call routed along the solid line arrow route generates a call charge for routing the call between an SIP→PSTN (S-P) gateway 2004 and the call receiver terminal 2002.

This situation results because, for power saving purposes, the above dual terminal stands by for a call using exclusively the PHS unit while supplying little power as possible to the WLAN unit when the PHS unit is available for communication. In other words, the terminal turns off the WLAN unit whenever in a PHS service area regardless of being in or out of a WLAN service area, i.e., the above terminal, though it originally functions as a dual terminal, functions substantially as a PHS unit when standing by in a PHS service area. For this reason, to call up a terminal through the IP network, a specific mechanism is required for the terminal to turn on the WLAN unit to connect it to the IP network and cause the WLAN unit to register necessary matters (IP address, etc.) with an SIP server 2000.

The "PPPhone"system (specifically, the WakeOn Ring technology "PPPush" employed in the system) provided by International Systems Research Co. is an example of such a mechanism. According to the "PPPhone" system, when a PDA with its power supply off receives, through a PHS unit, a message called "WakeOn trigger" for start up of the PDA, the PDA turns on the power supply, and connects to the IP network through a WLAN unit to register necessary matters with an SIP server.

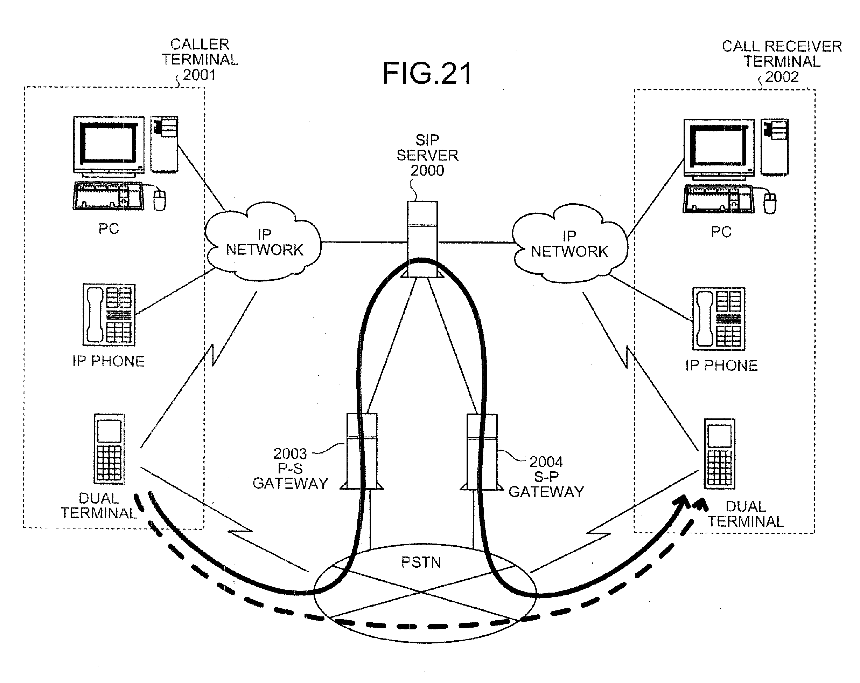

In another case, for example, when a caller makes an IP call from the caller terminal 2001 via the PSTN, and the call is forwarded through a PSTN→SIP (P-S) gateway 2003, the SIP server 2000 and further via the PSTN to the call receiver terminal 2002, as depicted by a solid line arrow in Fig. 21, the following two kinds of call charges result (double charge) for the caller: a call charge for the call between the caller terminal 2001 and the P-S gateway 2003, and a call charge for the call between the S-P gateway 2004 and the call receiver terminal 2002. In this case, making an ordinary call through the route represented by the dotted line arrow shown in Fig. 21 would be cheaper than making the IP call through the route represented by the solid line arrow and so advantages of using the above system diminish. This problem occurs when both the caller terminal 2001 and the call receiver terminal 2002 are devices that use the PSTN, even if neither terminal is a dual terminal.

### DISCLOSURE OF INVENTION

### PROBLEM TO BE SOLVED BY THE INVENTION

In summary, the above conventional techniques often invite cases in which a caller must bear call charges that fundamentally, the caller should not have to bear.
(1) Despite the ubiquitous IP telephone system being used via an IP network, the system calls up a call receiver via the PSTN system, thereby generating a charge for a call that would be free if the call receiver is called up via the IP network.
(2) Despite the ubiquitous IP telephone system being used via a PSTN, the system calls up a call receiver via the PSTN, thereby generating an extra charge that would not result if the call receiver is called up directly via the PSTN itself and not indirectly through the system.

The present invention was conceived in view of the above circumstances, and it is therefore the object of the present invention is to provide a communication relay method, a communication relay program, and a communication relay apparatus that can relay communication between a caller terminal and a call receiver terminal through a relatively most inexpensive route.

### MEANS FOR SOLVING PROBLEM

To solve the problem and achieve the object, the present invention forwards a first connection request from a first calling device to a second calling device, cancels the first connection request, and when receiving a second connection request from the second calling device, forwards the second connection request to the first calling device.

According to the above invention ("callback method", described hereinafter), when a relatively expensive communication route A and a relatively inexpensive route B are present between a caller terminal and a call receiver terminal, a connection request from the caller terminal via route A is cancelled, and the call receiving terminal makes a new connection request via route B.

Alternatively, the present invention forwards a first connection request from the first calling device to the second calling device through a first network, and when receiving a second connection request from the second calling device through a second network, forwards the first connection request to the second calling device through the second network.

According to the above invention ("reconnection method", described hereinafter), when a relatively expensive communication route A and a relatively inexpensive route B are present between a caller terminal and a call receiver terminal, a connection request from the caller terminal via route A is changed in communication route from route A to route B.

Alternatively, the present invention forwards a first connection request to the second calling device through a network from which the first connection request is received, cancels the first connection request, and when receiving a second connection request from the second calling device, forwards the second connection request to the first calling device.

According to the above invention ("reconnection plus call-again method", described hereinafter), a connection request generating a double charge for two routes by routing a call through the same network twice between a caller terminal and a call receiver terminal is cancelled before a charge for one route arises.

Alternatively, the present invention receives a connection request from the first calling device through a first network, identifies a second network through which the connection request is to be forwarded, and forwards the connection request to the second calling device through the second network when the first network and the second network are different.

According to the above invention ("call-again method", described hereinafter), a connection request bringing a double charge for two routes by routing a call through the same network twice between a caller terminal and a call receiver terminal is discarded before a charge for one route arises.

### EFFECT OF THE INVENTION

The communication relay method, the communication relay program, and the communication relay apparatus according to the present invention can facilitate communication relay between a caller terminal and a call receiver terminal through the relatively least expensive route.

### BRIEF DESCRIPTION OF DRAWINGS

Fig. 1 illustrates an overview of a "callback method" implemented by a communication relay apparatus according to a first embodiment of the present invention;
Fig. 2 illustrates an overview of a "callback method" implemented by the communication relay apparatus according to the first embodiment;
Fig. 3 illustrates a hardware configuration of the communication relay apparatus according to the first embodiment;
Fig. 4 illustrates a functional configuration of the communication relay apparatus according to the first embodiment;
Fig. 5 is a flowchart of various request processes performed by the communication relay apparatus according to the first embodiment;
Fig. 6 is a flowchart of a call receiving process performed by a call receiver terminal 102 according to the first embodiment;
Fig. 7 is an overview of a "reconnection method" implemented by a communication relay apparatus according to a second embodiment of the present invention;
Fig. 8 is an overview of a "reconnection method" implemented by the communication relay apparatus according to the second embodiment;
Fig. 9 illustrates a functional configuration of the communication relay apparatus according to the second embodiment;
Fig. 10 is a flowchart of various request processes performed by the communication relay apparatus according to the second embodiment;
Fig. 11 is a flowchart of a call receiving process performed by a call receiver terminal 702 according to the second embodiment;
Fig. 12 is an overview of a "reconnection plus call-again method" implemented by a communication relay apparatus according to a third embodiment of the present invention;
Fig. 13 is an overview of a "reconnection plus call-again method" implemented by the communication relay apparatus according to the third embodiment;
Fig. 14 is a flowchart of various request processes performed by the communication relay apparatus according to the third embodiment;
Fig. 15 is a flowchart of a call receiving process performed by a call receiver terminal 1202 according to the third embodiment;
Fig. 16 is a flowchart of a call receiving process performed by a caller terminal 1201 according to the third embodiment;
Fig. 17 is an overview of a "call-again method" implemented by a communication relay apparatus according to a fourth embodiment of the present invention;
Fig. 18 illustrates a functional configuration of a communication relay apparatus according to the fourth embodiment;
Fig. 19 is a flowchart of various request processes performed by the communication relay apparatus according to the fourth embodiment;
Fig. 20 is an overview of a problem of a conventional technique; and
Fig. 21 is an overview of another problem of the conventional technique.

### EXPLANATIONS OF LETTERS OR NUMERALS

- 100, 700, 1200, 1700:: SIP server
- 101, 701, 1201, 1701:: caller terminal
- 102, 702, 1202, 1702:: call receiver terminal
- 103, 703, 1203, 1703:: P-S gateway
- 104, 704, 1204, 1704:: S-P gateway
- 105:: announce service
- 300:: bus
- 301:: CPU
- 302:: ROM
- 303:: RAM
- 304:: HDD
- 305:: FD
- 306:: FDD
- 307:: FD
- 308:: network I/F
- 400, 900, 1800:: forwarding destination table
- 401, 901:: forwarding origin table
- 402, 902, 1801:: proxy
- 403, 903, 1802:: forwarding-destination identifying unit
- 403a:: INVITE-type identifying unit
- 403b, 903a:: forwarding-destination-type identifying unit
- 404, 904, 1803:: request generating unit
- 405, 905:: forwarding-origin-table updating unit
- 906:: registrar
- 906a:: register-type identifying unit
- 1802a:: forward-ability determining unit

### BEST MODE(S) FOR CARRYING OUT THE INVENTION

Referring to the accompanying drawings, exemplary embodiments of the communication relay method, the communication relay program, and the communication relay apparatus according to the present invention are described in detail below. The embodiments do not limit the invention by any means.

The present invention offers the following four methods to solve the above problems (1) and (2) of conventional techniques: a callback method according to the first embodiment, for solving problem (1); a reconnection method according to the second embodiment, also for solving problem (1); a reconnection plus call-again method according to the third embodiment for solving problem (2); a call-again method according to the fourth embodiment, also for solving problem (2).

### (First Embodiment)

### (Callback Method)

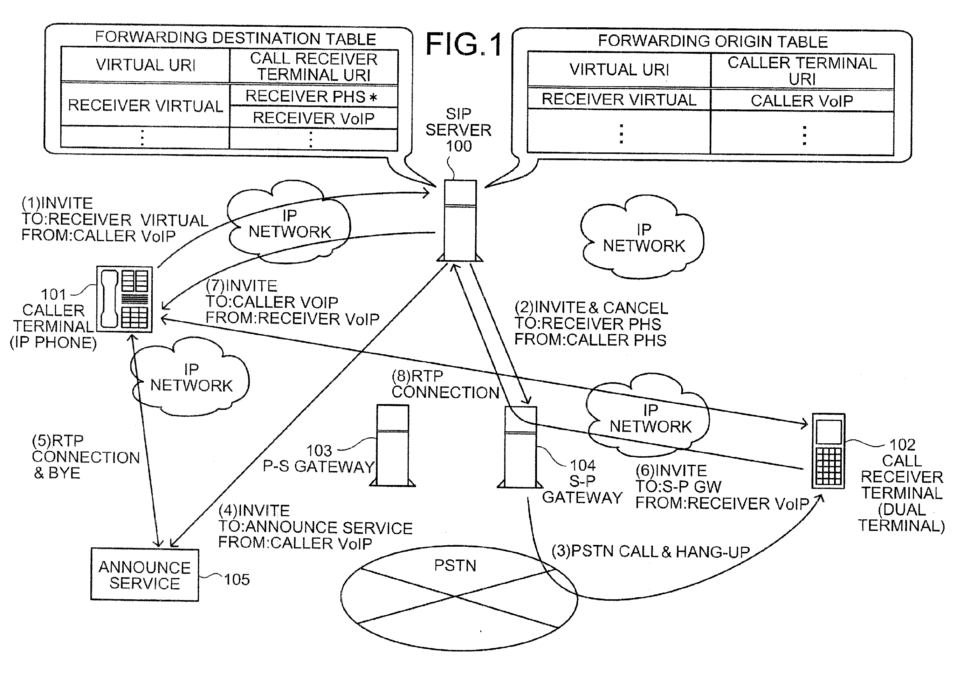

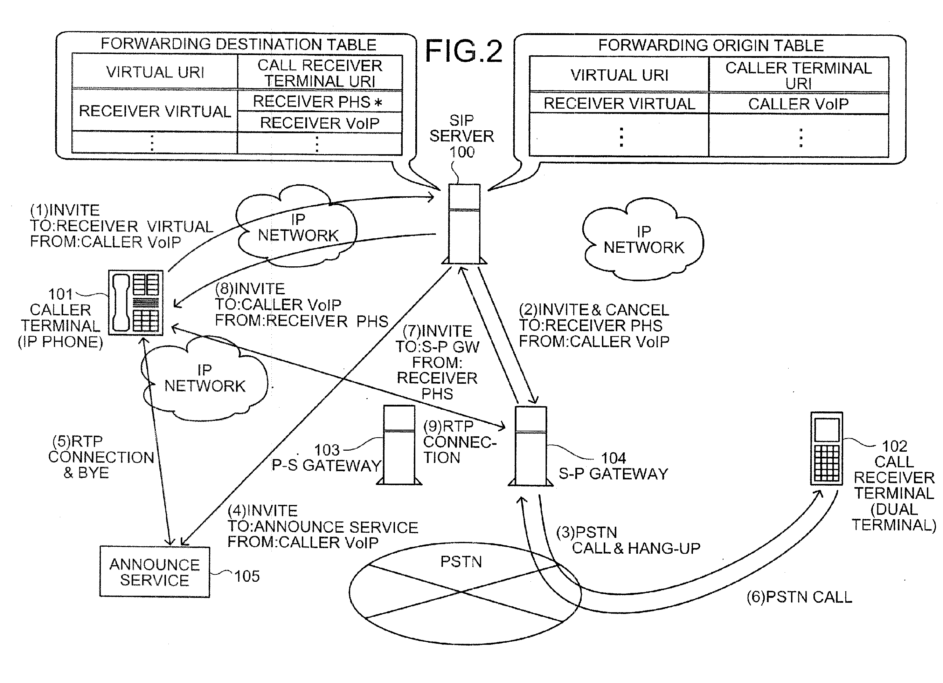

Figs. 1 and 2 illustrate an overview of a "callback method" implemented by a communication relay apparatus according to the first embodiment of the present invention. A caller terminal 101 may be any device capable of voice over internet protocol (VoIP) communication under SIP. Here, the caller terminal 101 is assumed to be, for example, a telephone (IP phone) that is connected to an IP network through a VoIP adapter. When a caller makes a call from the caller terminal 101 to a main number assigned to each call receiver, e.g., "050-XXXX-XXXX", an INVITE request addressed to an SIP uniform resource identifier (URI), e.g., "sip:+81-050-XXXX-XXXX@---", signifying the main number is transmitted to a SIP server 100 through the IP network ((1) in Fig. 1). Hereinafter, the above URI is called "virtual URI".

The SIP server 100, equipped with the aforementioned forwarding destination selection function, forwards the INVITE request addressed to the virtual URI of the call receiver, to at least one actual SIP URI of the call receiver. Hereinafter, actual SIP URI's are called "call receiver terminal URI's", and one URI selected as a forwarding destination, from among the call receiver terminal URI's, is called "selected URI". Information regarding corresponding relationships between a virtual URI and the call receiver terminal URI's, and which one of the call receiver terminal URI's is a selected URI is recorded in a "forwarding destination table" of the SIP server 100. As shown in Fig. 1, a call receiver terminal URI indicated by an asterisk is a selected URI.

After the address, a virtual URI, of the INVITE request from the caller terminal 101 is replaced with a selected URI at the SIP server 100, the INVITE request is forwarded to the call receiver terminal 102 that is identified exclusively by the selected URI. However, when the selected URI is a SIP URI signifying an identifier on the PSTN (specifically, a phone number), e.g., "tel:+81-070-XXXX-XXXX", the INVITE request is forwarded first to a S-P gateway 104 ((2) in Fig. 1), where the request is turned into a call on the PSTN, and then is forwarded to the call receiver terminal 102 via the PSTN ((3) in Fig. 1). Hence, as previously mentioned, a call charge for the call between the S-P gateway 104 and the call receiver terminal 102 results even when, fundamentally, no charges should occur, specifically, in the case of when the call receiver terminal 102 functioning as a dual terminal is in a WLAN service area.

A selected URI is either (a) an SIP URI that is among SIP URI's corresponding to a device connectible to both a relatively expensive (higher communication cost) network and a relatively inexpensive network (lower communication cost) and represents an identifier for such a device, or (b) an SIP URI other than (a). For example, an SIP URI signifying a PHS number of a dual terminal connectible to both a PSTN and an IP network is (a), and an SIP URI signifying a PHS number of an ordinary PHS is (b). In other words, an SIP URI signifying a PHS number is (a) if the PHS number is assigned to a dual terminal, and is (b) if the PHS number is assigned to an ordinary PHS. Hereinafter, an SIP URI equivalent to the SIP URI defined as (b) is called "ordinary".

Cases in which a caller must bear call charges that fundamentally, the caller should not have to bear (specifically, the call charge for the call between the S-P gateway 104 and the call receiver terminal 102), the selected URI is (a), and not "ordinary". According to the first embodiment, when the selected URI is not "ordinary", immediately after the INVITE request from the SIP server 100 is forwarded to the S-P gateway 104, the SIP server 100 transmits a CANCEL request to the S-P gateway 104 ((2) in Fig. 1), thereby cutting off the call from the S-P gateway 104 to the call receiver terminal 102 before a call charge is incurred, specifically, after a sounding of approximately one dial tone ((3) in Fig. 1).

While forwarding the INVITE request from the caller terminal 101 to the S-P gateway 104, the SIP server 100 also forwards the INVITE request to an announce service 105 ((4) in Fig. 1), and forwards a 2XX response (success) from the announce service 105 to the caller terminal 101 and an acknowledgment (ACK) request from the caller terminal 101 to the announce service 105, sequentially. As a result, a real-time transport protocol (RTP) connection between the caller terminal 101 and the announce service 105 is established. Subsequently, the announce service 105 sends an instruction to the caller, instructing the caller to terminate the call and wait for a callback from the call receiver. Thus, the call from the caller terminal 101 is terminated at the point that a BYE request has been transmitted from the caller terminal 101 to the announce service 105 ((5) in Fig. 1).

Meanwhile, the call receiving terminal 102, which is disconnected from the S-P gateway 104 through a so-called "one dial tone disconnection", connects to the IP network through a WLAN unit or to the PSTN through a PHS unit, and calls back immediately. The call receiving terminal 102, however, cannot identify the caller terminal 101 to call back (an incoming call record in the call receiving terminal 102 retains not the phone number of the caller terminal 101 but that of the S-P gateway 104). To solve this problem, according to the first embodiment, the corresponding relationship between the call receiving terminal 102 and the caller terminal 101, which is the callback destination, is kept recorded in a "forwarding origin table" in the SIP server 100.

Specifically, upon forwarding the INVITE request from the caller terminal 101 to the S-P gateway 104 and to the announce service 105, the SIP server 100 registers a combination of the virtual URI written in the "To" header of the INVITE request ("Receiver Virtual" shown in (1) in Fig. 1) and the URI of the caller terminal 101 written in the "From" header of the INVITE request (caller terminal URI, i.e., "caller VoIP" shown in (1) in Fig. 1) with a "forwarding origin table" maintained in the SIP server 100.

Afterward, as shown in Fig. 1, when the call receiver terminal 102 connects to the IP network through the WLAN unit and calls back the S-P gateway 104, an INVITE request from the call receiver terminal 102 travels through the S-P gateway 104, to which the INVITE request is addressed, and is further forwarded to the SIP server 100 ((6) in Fig. 1).

Therefore, in a case as shown in Fig. 1, INVITE requests received by the SIP server 100 consist of two types of requests: an ordinary INVITE request ((1) in Fig. 1, and hereinafter "ordinary"), and an INVITE request triggered by a past call ((6) in Fig. 1, and hereinafter "callback"). Whether an INVITE request is ordinary or callback can be determined by reference to the above forwarding destination table and forwarding origin table. Specifically, the INVITE request is a callback when a virtual URI that corresponds to an SIP URI written in the "From" header of the INVITE request in the forwarding destination table is also registered in the forwarding origin table, and is ordinary when the virtual URI is not registered in the forwarding origin table.

When the INVITE request received is a callback, the SIP server 100 replaces the address of the INVITE request with the caller terminal URI (caller VoIP in Fig. 1) that is corresponds to the above virtual URI in the forwarding origin table, and forwards the INVITE request to the caller terminal 101 ((7) in Fig. 1). Subsequently, following the transmission of a 2XX response (success) and an ACK request, RTP connection is established between the call receiver terminal 102 and the caller terminal 101 ((8) in Fig. 1).

Meanwhile, when the call receiver terminal 102 connects to the PSTN through the PHS unit and calls back the S-P gateway 104, as shown in Fig. 2 ((6) in Fig. 2), an INVITE request addressed to the S-P gateway 104 is transmitted from the S-P gateway 104 to the SIP server 100 ((7) in Fig. 2). The SIP server 100 then determines whether the INVITE request is a callback in the same manner as described above. When the INVITE request is a callback, the SIP server 100 replaces the address of the INVITE request with a caller terminal URI extracted from the forwarding origin table, and forwards the INVITE request ((8) in Fig. 2). Subsequently, following the transmission of a 2XX response (success) and an ACK request, RTP connection is established between the S-P gateway 104 and the caller terminal 101 ((9) in Fig. 2). Although the P-S gateway 103 shown in Figs. 1 and 2 can be omitted from the configuration according to the first embodiment, the P-S gateway 103 is depicted here for the purpose of comparison with other embodiments hereinafter described.

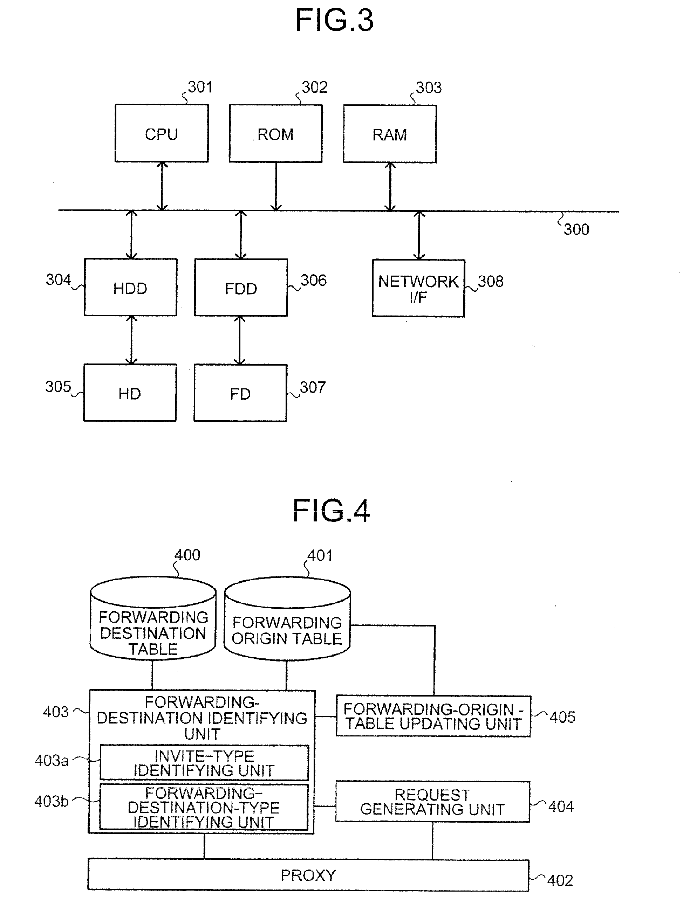

Fig. 3 illustrates a hardware configuration of the communication relay apparatus according to the first embodiment of the present invention (specifically the SIP server 100 shown in Fig. 1). A CPU 301 assumes overall control of the communication relay apparatus. A read-only memory (ROM) 302 stores a boot program, etc. A random access memory (RAM) 303 is used as a work area for the CPU 301.

A hard disk drive (HDD) 304, under the control of the CPU 301, controls the reading and writing of data on a hard disk (HD) 305 that saves data written thereto under the control of the HDD 304. A floppy disk drive (FDD) 306, under the control of the CPU 301, controls the reading and writing of data on a floppy disk (FD) 307 that saves data written thereto under the control of the FDD 306. The FD 307 is an example of a removable recording medium, and may be replaced with a compact disk read only memory (CD-ROM) (compact disk-recordable (CD-R), compact disk-rewritable (CD-RW)), magneto optical disk (MO), digital versatile disk (DVD), memory card, etc.

A network I/F (Interface) 308 is connected to a network, such as a LAN and a MAN, and controls data exchange between the network and the inside of the apparatus. The above components are connected through a bus 300. In addition to the above components, the apparatus may further include console equipment, such as a display, a mouse, and a keyboard.

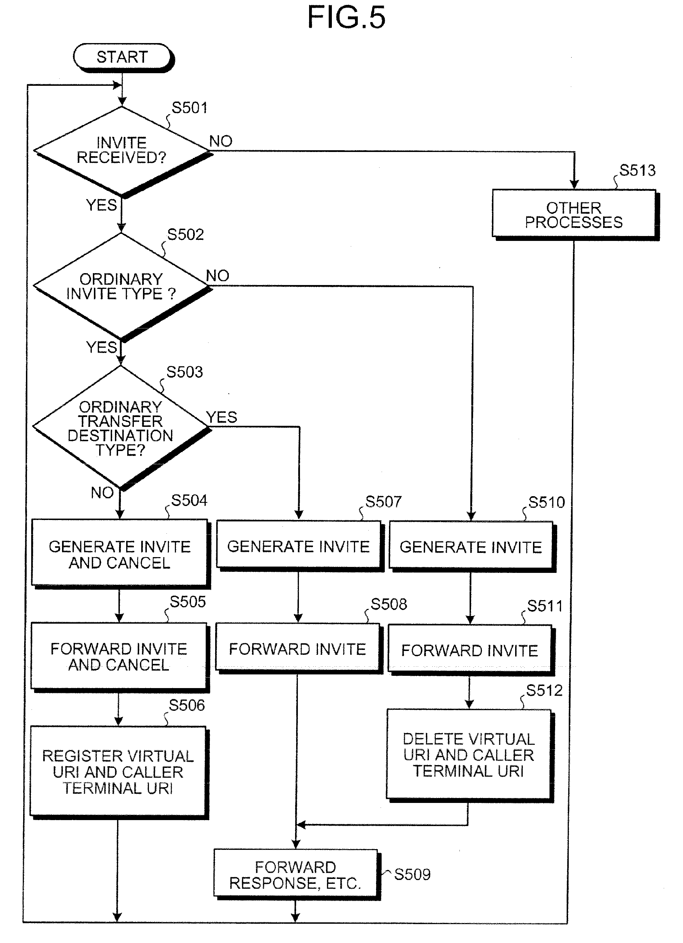

Fig. 4 illustrates a functional configuration of the communication relay apparatus according to the first embodiment of the present invention (specifically the SIP server 100 shown in Fig. 1). Fig. 5 is a flowchart of various request processes performed by the communication relay apparatus. The function of each unit shown in Fig. 4 is described according to the flowchart of Fig. 5.

When a proxy 402 of the SIP server 100 receives an INVITE request (step S501 : YES), the INVITE request is sent to a forwarding-destination identifying unit 403, where an INVITE-type identifying unit 403a of the forwarding-destination identifying unit 403 identifies the type of the INVITE request. When the type is "ordinary" (step S502: YES), a forwarding-destination-type identifying unit 403b of the forwarding-destination identifying unit 403 identifies the type of the selected URI corresponding to the virtual URI, which is the address of the INVITE request.

When the type of the selected URI is not "ordinary", e.g., when the selected URI is an SIP URI signifying a PHS number of a dual terminal (step S503: NO), the forwarding-destination identifying unit 403 sends the input INVITE request from the proxy 402, the selected URI, and the SIP URI of the announce service 105, to a request generating unit 404.

The request generating unit 404 then generates three requests consisting of an INVITE request addressed to the selected URI, a CANCEL request addressed to the selected URI, and an INVITE request addressed to the SIP URI of the announce service 105 (step S504). The proxy 402 forwards these requests in sequence (step S505). The CANCEL request addressed to the selected URI is forwarded after the S-P gateway 104, which received the INVITE request addressed to the selected URI, has called up the call receiving terminal 102.

The forwarding-destination identifying unit 403 instructs a forwarding-origin-table updating unit 405 to register, in a forwarding origin table 401, a combination of the virtual URI of the input INVITE request from the proxy 402 and the caller terminal URI (step S506).

When the type of the selected URI is "ordinary" (step S503: YES), the forwarding-destination identifying unit 403 sends the input INVITE request from the proxy 402 and the selected URI to the request generating unit 404, which then replaces the address of the INVITE request with the selected URI to generate an INVITE request addressed to the selected URI (step S507). Subsequently, the request generating unit 404 sends the generated INVITE request to the proxy 402, which forwards the generated INVITE request (step S508). After that, the proxy 402 executes the usual processes that follow an INVITE request forwarding, processes including the forwarding of a response and ACK request (step S509).

When the type of the input INVITE request from the proxy 402 is "callback" (step S502: NO), i.e., when the input INVITE request is triggered by another INVITE request that has been forwarded out in the previous process at steps S501 to S506, the forwarding-destination identifying unit 403 sends, to the request generating unit 404, the input INVITE request and the caller terminal URI, which is registered with the forwarding origin table 401 when the other INVITE request is forwarded out. The request generating unit 404 then replaces the address of the INVITE request with the caller terminal URI to generate an INVITE request addressed to the caller terminal URI (step S510), and the INVITE request is forwarded by the proxy 402 to the caller terminal 101 (step S511).

The forwarding-destination identifying unit 403 instructs the forwarding-origin-table updating unit 405 to delete the combination of the virtual URI and the caller terminal URI, the combination that is registered with the forwarding origin table 401 when the other INVITE request triggering the INVITE request is forwarded (step S512). Subsequently, the proxy 402 executes the usual processes that follow an INVITE request forwarding, processes including the forwarding of a response and ACK request (step S509). When the SIP server 100 receives a request other than an INVITE request (step S501: NO), the SIP server 100 executes another process corresponding to the received request (step S513).

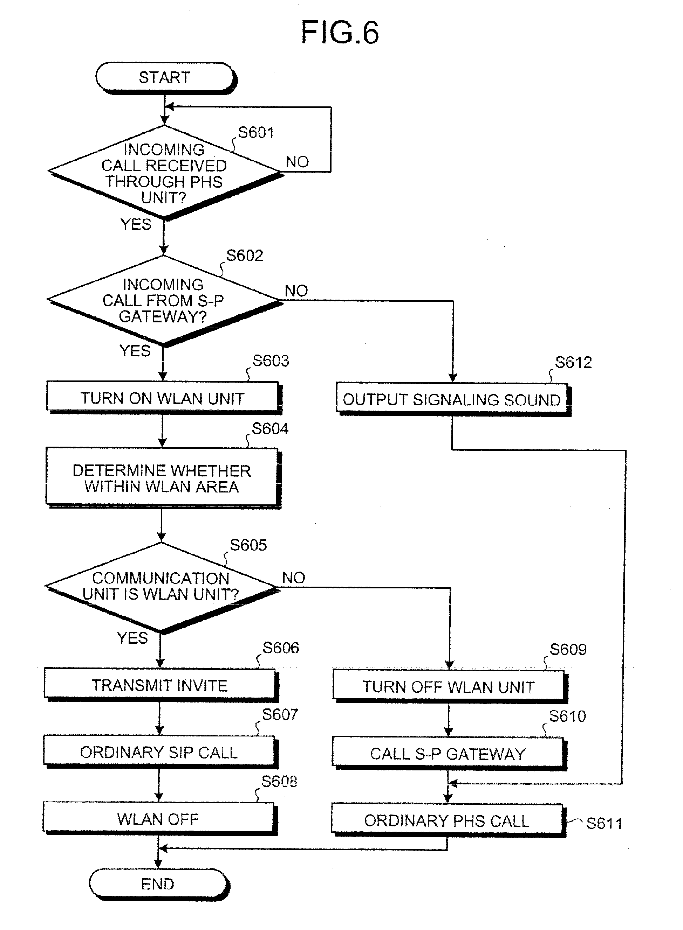

Fig. 6 is a flowchart of a call receiving process performed by a call receiver terminal 102 according to the first embodiment of the present invention. When receiving an incoming call from the S-P gateway 104 (whether the incoming call is from the S-P gateway 104 can be determined by checking the phone number indicated in the call) while standing by in a PHS mode (step S601: YES and step S602: YES), the call receiver terminal 102 does not output a signaling sound, but waits for termination of the call, turns on the WLAN unit (step S603), and determines whether the call receiver terminal 102 is within the WLAN service area (step S604). The call receiver terminal 102 then selects either the WLAN unit or the PHS unit as the communication unit depending on the determination result. Besides the determination result, the selection of the communication unit may be based on communication cost, call quality, preset preferences, etc.

When selecting the WLAN unit (step S605: YES), the call receiver terminal 102 connects to the IP network through the WLAN unit and transmits an INVITE request to the S-P gateway 104 (step S606) to start an ordinary SIP call (step S607). When the call is over, the call receiver terminal 102 turns off the WLAN unit (step S608). Although omitted in Fig. 6, the call receiver terminal 102, actually, transmits a REGISTER request to the SIP server 100 before transmitting the INVITE request.

On the other hand, when selecting the PHS unit (step S605: NO), the call receiver terminal 102 turns off the WLAN unit, which is tuned on (step S609). The call receiver terminal 102 then connects to the PSTN through the PHS unit to make a call to the phone number of the S-P gateway 104 (step S610), starting an ordinary PHS call (step S611). The call is relayed in the form of an SIP call along the route beyond the S-P gateway 104. When receiving a call from other than the S-P gateway 104, the call receiver terminal 102 outputs a signaling sound (step S602: NO, step S612: YES). After the call receiver terminal 102 user answers the call, an ordinary PHS call starts (step S611).

Description is made with reference to Figs. 1 and 2 and Figs. 5 and 6. As shown in Fig. 1, when the forwarding destination of a call from the caller terminal 101 is not "ordinary", the SIP server 100 instructs the S-P gateway 104 to call up the call receiving terminal 102 using the so-called "one dial tone disconnection", which does not incur a call charge, and connects the caller terminal 101 temporarily to the announce service 105 (steps S501 to S506 in Fig. 5).

Subsequently, the call receiving terminal 102 connects to the IP network through the WLAN unit to send an INVITE request to the SIP server 100 (steps S601 to S606 in Fig. 6), or connects to the PSTN through the PHS unit to make a call to the S-P gateway 104 (steps S601 to S605, S609, and S610 in Fig. 6), causing the S-P gateway 104 to send an INVITE request to the SIP server 100. In both cases, the SIP server 100 determines the above INVITE requests to be callbacks, replaces the address of each INVITE request with the URI of the call receiver terminal 101 and forwards the INVITE request (steps S501, S502, and S510 to S512 in Fig. 5).

When receiving a 2XX response from the caller terminal 101, the SIP server 100 forwards the response to the call receiver terminal 102, or to the S-P gateway 104 and when there is an ACK request from the call receiver terminal 102 or from the S-P gateway 104, the SIP server 100 forwards the ACK request to the caller terminal 101 (step S509 in Fig. 5).

According to the first embodiment described above, in the case as shown in Fig. 1, at route segment (3) that uses only the PSTN, a call is terminated through one dial tone disconnection and therefore, no call charge is incurred for any of the route segments (1) to (8). As a result, the communication route follows the dotted line arrow shown in Fig. 20, however, the direction of the arrow is reversed because, in this case, the communication route represents the callback route. Compared to the solid line arrow representing a conventional communication route, the communication route of the first embodiment eliminates the call charge for the call between the S-P gateway 2004 and the call receiver terminal 2002.

In the case as shown in Fig. 2, the PSTN is used on each route segment (3) and (6). Route segment (3) is free of charge due to one dial tone disconnection, however, route segment (6) incurs a charge. The communication route follows the solid line arrow shown in Fig. 20, however, the direction of the arrow is reversed because, in this case, the communication route represents the callback route. As in the case of a conventional technique, a call charge is incurred. However, the call charge is not incurred by the caller but by the recipient of the call. This compensates for a conventional shortcoming of a dual terminal that a call can be made free of charge but an incoming call cannot be received free of charge.

According to the first embodiment, however, the caller is burdened by having to hang up to terminate the call and by the additional time required to connect with an intended call recipient. A second embodiment described hereinafter does not employ the method of callback from the call recipient. According to the second embodiment, a call from the caller, which is connected to the call recipient through a relatively expensive communication route A when connected by a conventional method, is reconnected to the call receiver through a relatively inexpensive communication route B.

### (Second Embodiment)

### (Reconnection Method)

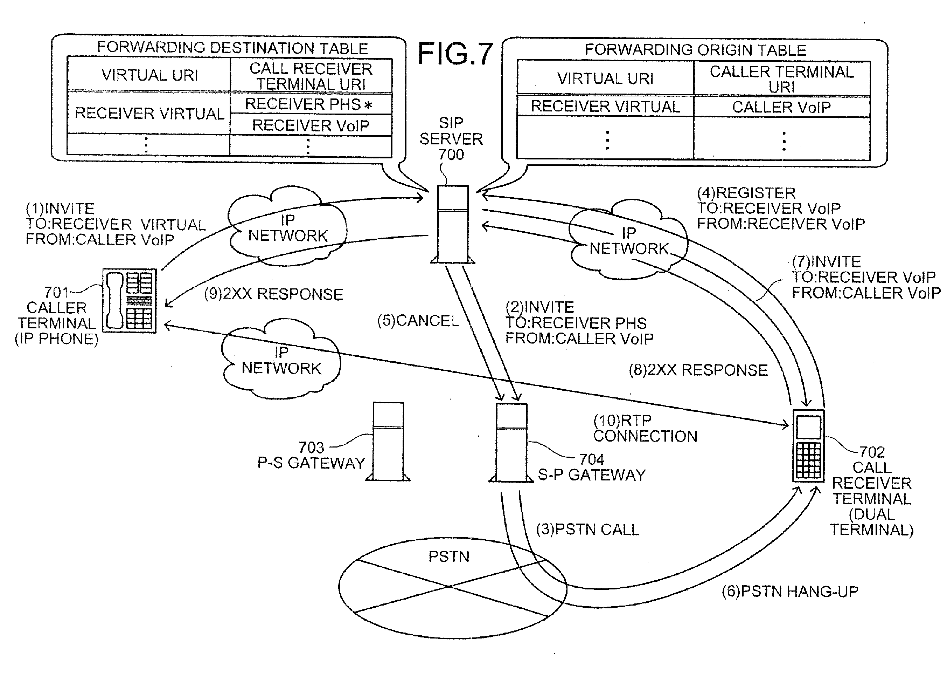

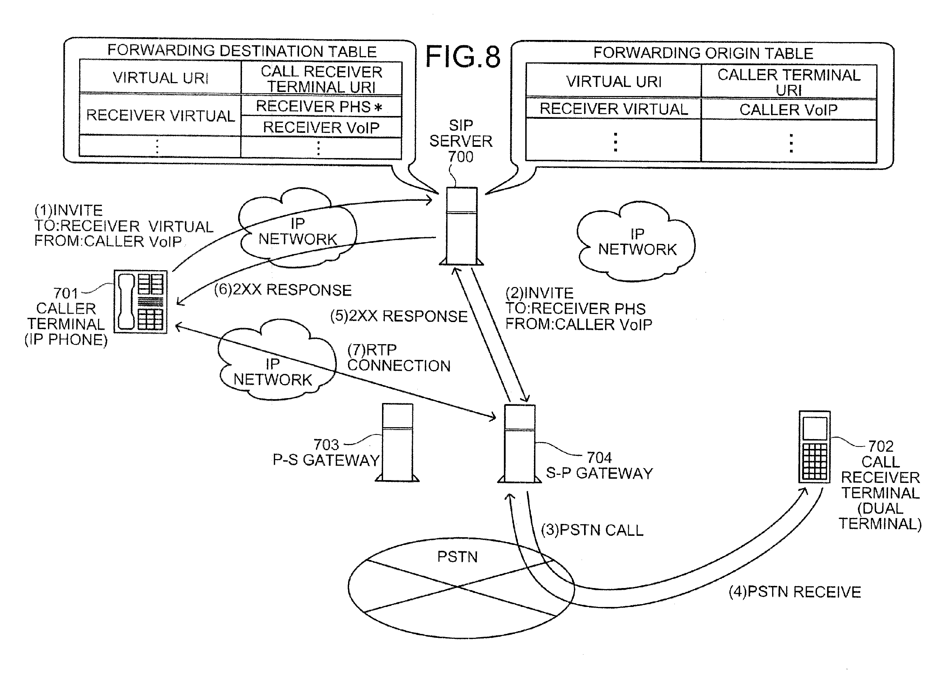

Figs. 7 and 8 are overviews of a "reconnection method" implemented by a communication relay apparatus according to a second embodiment of the present invention. When receiving, from a caller terminal 701, an INVITE request addressed to a virtual URI ((1) in Fig. 7), an SIP server 700 searches a forwarding destination table for the selected URI corresponding to the virtual URI, and replaces the address of the INVITE request with the selected URI to forward the INVITE request. When the selected URI is an SIP URI signifying a PHS number of a dual terminal, the INVITE request is forwarded to an S-P gateway 704 ((2) in Fig. 7), where the INVITE request is turned into a PSTN call, and is further forwarded to a call receiver terminal 702 via the PSTN ((3) in Fig. 7). The process up to this point is the same as the process indicated in the callback method of the first embodiment.

The call receiver terminal 702 called up by the S-P gateway 704 selects either WLAN unit or PHS unit as a communication unit. When selecting the WLAN unit, the call receiver terminal 702 transmits a REGISTER request to the SIP server 700, as shown in Fig. 7 ((4) in Fig. 7).

Therefore, in the case shown in Fig. 7, REGISTER requests received by the SIP server 700 consist of two types of requests: an ordinary REGISTER request (hereinafter, "ordinary"), and a REGISTER request triggered by a past call ((4) in Fig. 7). The type of the REGISTER request can be determined by referring to the forwarding destination table and forwarding origin table. Specifically, the REGISTER request is a REGISTER request triggered by a past call when a virtual URI that corresponds to an SIP URI (with which an IP address is registered) written in the "To" header and "From" header of the REGISTER request in the forwarding destination table is registered also in the forwarding origin table, and is ordinary when the virtual URI is not registered in the forwarding origin table.

When the type of the received REGISTER request is not "ordinary", the SIP server 700 transmits a CANCEL request to the S-P gateway 704 ((5) in Fig. 7), causing the S-P gateway 704 to terminate the call from the S-P gateway 704 to the call receiving terminal 702 ((6) in Fig. 7). Meanwhile, the SIP server 700 replaces the address of the INVITE request receiving from the caller terminal 701 ((1) in Fig. 7) with the SIP URI with which the IP address registered by the call receiving terminal 702 ((4) in Fig. 7), and forwards the INVITE request ((7) in Fig. 7). Subsequently, when receiving a 2XX response (success) from the call receiver terminal 702 ((8) in Fig. 7), the SIP server 700 forwards the 2XX response to the caller terminal 701 ((9) in Fig. 7). Then, following the forwarding of an ACK request, an RTP connection is established between the caller terminal 701 and the call receiver terminal 702 ((10) in Fig. 7).

On the other hand, when the call receiving terminal 702 called up by the S-P gateway 704 selects the PHS unit as a communication unit, the call receiver terminal 702 sends a response signal to the S-P gateway 704 via the PSTN at the point that the call receiver terminal 702 user answers a call, as shown in Fig. 8 ((4) in Fig. 8). The S-P gateway 704, receiving the response signal, transmits a 2XX response to the SIP server 700 ((5) in Fig. 8), which forwards the 2XX response further to the call receiver terminal 701 ((6) in Fig. 8). Subsequently, following the forwarding of an ACK request, a RTP connection is established between the caller terminal 701 and the S-P gateway 704 ((7) in Fig. 8).

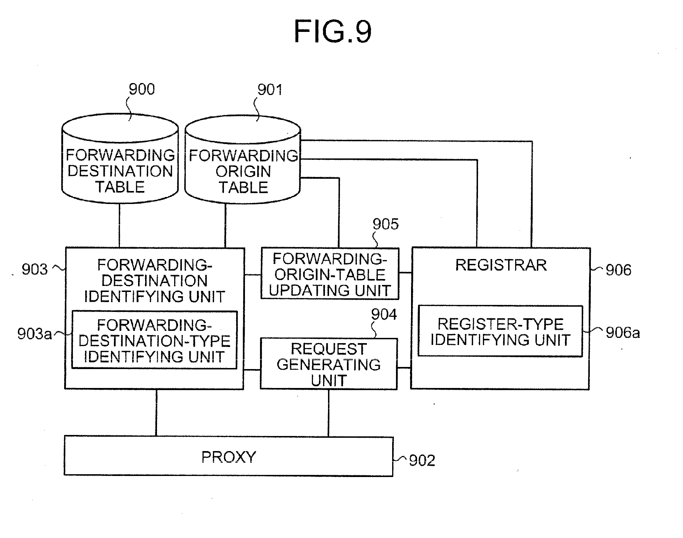

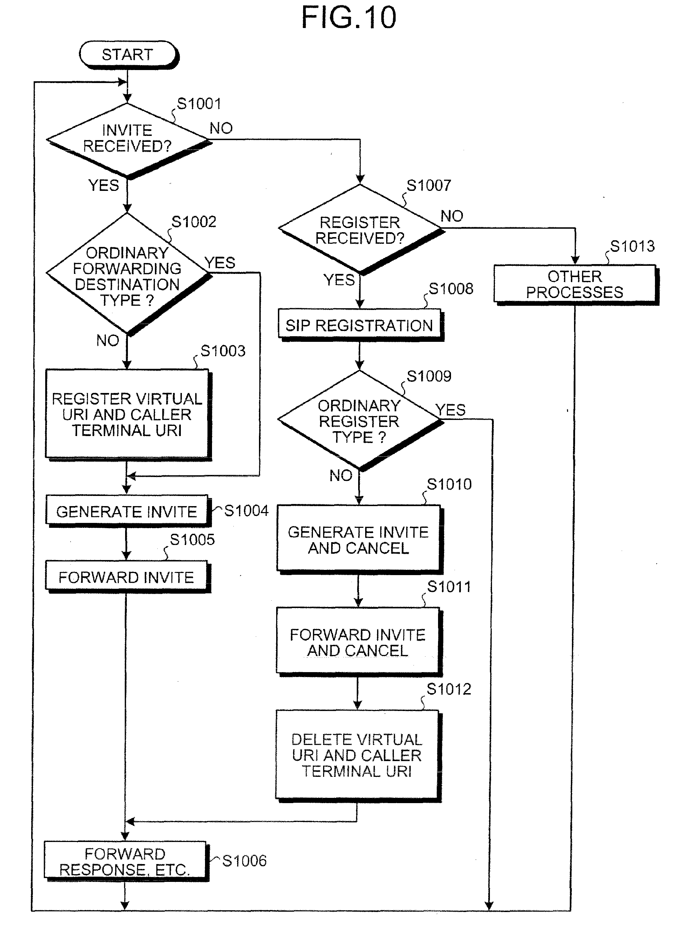

The hardware configuration of the communication relay apparatus according to the second embodiment of the present invention (specifically the SIP server 700 shown in Figs. 7 and 8) is the same as the hardware configuration of the communication relay apparatus according to the first embodiment shown in Fig. 3. The description of hardware configuration of the communication relay apparatus of the second embodiment, therefore, is omitted. Fig. 9 illustrates a functional configuration of the communication relay apparatus. Fig. 10 is a flowchart of various request processes performed by the communication relay apparatus. The function of each unit shown in Fig. 9 is described according to the flowchart shown in Fig. 10.

When a proxy 902 of the SIP server 700 receives an INVITE request (step S1001: YES), the INVITE request is sent to a forwarding-destination identifying unit 903, where a forwarding-destination-type identifying unit 903a of the forwarding-destination identifying unit 903 refers to a forwarding destination table 900 and identifies the type of selected URI associated with the virtual URI, which is the address of the INVITE request.

When the type of the selected URI is not "ordinary" (step S1002: NOT), the forwarding-destination identifying unit 903 instructs a forwarding-origin-table updating unit 905 to register a combination of the virtual URI of the INVITE request and the caller terminal URI in the forwarding origin table 901 (step S1003). When the type of the selected URI is "ordinary" (step S1002: YES), the process at step S1003 is omitted.

In both cases of "ordinary" and not "ordinary", the INVITE request and the selected URI are sent to a request generating unit 904, which replaces the address of the INVITE request with the selected URI to generate an INVITE request addressed to the selected URI (step S1004). Then, after forwarding the generated INVITE request (step S1005), the proxy 902 executes the usual processes that follow an INVITE request forwarding, processes including the forwarding of a response and ACK request (step S1006).

Meanwhile, when a registrar 906 of the SIP server 700 receives a REGISTER request (step S1007: YES), a register-type identifying unit 906a of the registrar 906 identifies the type of the REGISTER request after the usual SIP registration process (step S1008) is completed.

When the type of the REGISTER request is "ordinary" (step S1009: YES), the procedure flow returns to step S1001. When the type of the REGISTER request is not "ordinary" (step S1009: NO), i.e., when the REGISTER request is triggered by the INVITE request that has been forwarded in the past at steps S1001 to S1006, the registrar 906 sends the INVITE request, the selected URI that is the forwarding destination of the INVITE request, and the caller terminal URI that has been registered in the forwarding origin table 901 in forwarding of the INVITE request, to the request generating unit 904.

The request generating unit 904 then generates two requests consisting of an INVITE request addressed to the caller terminal URI, and a CANCEL request addressed to the selected URI (step S1010). The proxy 902 forwards these requests in sequence (step S1011).

The registrar 906 instructs the forwarding-origin-table updating unit 905 to delete the combination of the virtual URI and the caller terminal URI, which is registered in the forwarding origin table 901 when the INVITE request triggering the REGISTER request is forwarded (step S1012). Subsequently, the proxy 902 executes the usual processes that follow an INVITE request forwarding, processes including the forwarding of a response and an ACK request (step S1006). When the SIP server 700 receives a request other than an INVITE request and a REGISTER request (step S1001: NO and S1007: NO), the SIP server 100 executes another process corresponding to the received request (step S1013).

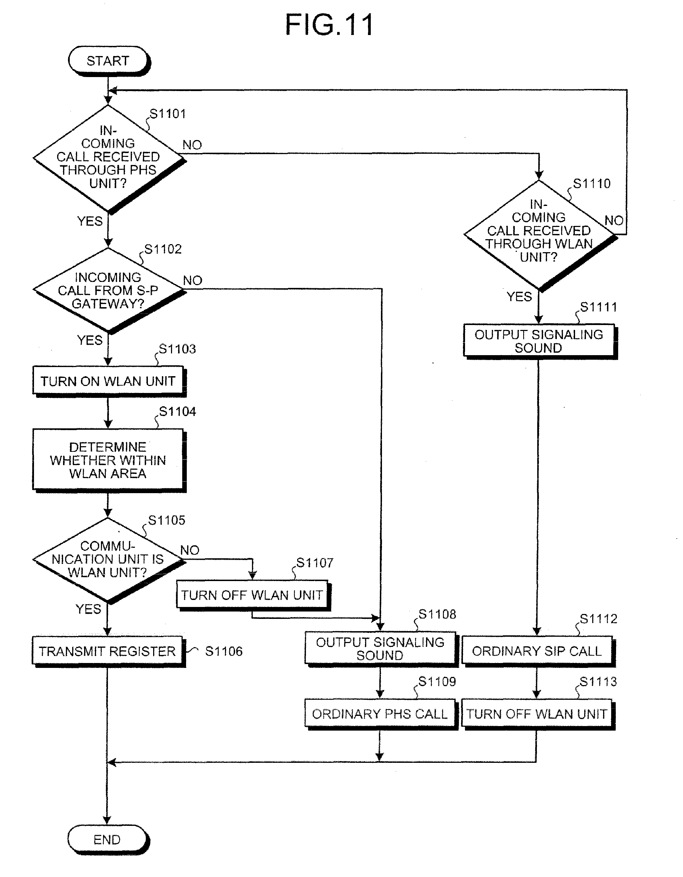

Fig. 11 illustrates a flowchart of a call receiving process performed by the call receiver terminal 702 according to the second embodiment of the present invention. When receiving an incoming call from the S-P gateway 704 while standing by in a PHS mode (step S1101: YES and S1102: YES), the call receiver terminal 702 turns on the WLAN unit (step S1103) to determine whether the call receiver terminal 702 is within the WLAN service area (step S1104). The call receiver terminal 102 then selects either the WLAN unit or the PHS unit as a communication unit depending on the determination result. Besides the determination result, selection of the communication unit may be based on communication cost, call quality, preset preferences, etc.

When selecting the WLAN unit (step S1105: YES), the call receiver terminal 702 connects to the IP network through the WLAN unit, and transmits a REGISTER request to the SIP server 700 (step S1106). On the other hand, when selecting the PHS unit (step S1105: NO), the call receiver terminal 702 turns off the WLAN unit (step S1107), and outputs a signaling sound (step S1108). Then, after the call receiver terminal 702 user answers the call, an ordinary PHS call starts (step S1109). When receiving an incoming call from other than the S-P gateway 704 while standing by in the PHS mode (step S1101: YES and step S1102: NO), the call receiver terminal 702 also outputs the signaling sound (step S1108). Then, after the call receiver terminal 702 user answers the call, an ordinary PHS call starts (step S1109).

When an INVITE request arrives at the WLAN unit turned on at step S1103 (step S1101: NO and step S1110: YES), the call receiver terminal 702 outputs the signaling sound (step S1111). Then, after the call receiver terminal 702 user answers the call, an ordinary PHS call starts (step S1112). At the end of the call, the WLAN unit, which is turned on at reception of the incoming call, is turned off again (step S1113).

Description is made with reference to Figs. 7 and 8 and Figs. 10 and 11. in the case as shown in Fig. 7, the SIP server 700 first forwards a call from the caller terminal 701 to the call receiver terminal 702 via the PSTN (step S1001 to S1005 in Fig. 10). Upon receiving a REGISTER request from the call receiver terminal 702 (step S1101 to S1106 in Fig. 11), however, the SIP server 700 cancels the forwarding of the call via the PSTN, and then forwards the call to the call receiver terminal 702 via the IP network (step S1007 to S1012 in Fig. 10). Subsequently, when receiving a 2XX response from the call receiver terminal 702, the SIP server 700 forwards the 2XX response to the caller terminal 701. When receiving an ACK request from the caller terminal 701, the SIP server 700 then forwards the ACK request to the call receiver terminal 702 (step S1006 in Fig. 10).

In the case as shown in Fig. 8, when the call receiver terminal 702 sends a response signal to the S-P gateway 704 (steps S1101 to S1105 and S1107 to S1109 in Fig. 11), the S-P gateway 704 sends a 2XX response to the SIP server 700. The SIP server 700 thus forwards the 2XX response to the caller terminal 701, and, when receiving an ACK request from the caller terminal 701, forwards the ACK request to the S-P gateway 704 (step S1006 in Fig. 10).

In the case as shown in Fig. 7, if the SIP server 700 receives a 3XX, 4XX, 5XX, or 6XX response from the S-P gateway 704 before receiving the REGISTER request from the call receiver terminal 702, the call from the caller terminal 701 is terminated at the point that the 3XX, 4XX, 5XX, or 6XX response is forwarded to the caller terminal 701. As a result, the SIP server 700 cannot connect to the caller terminal 701 when the call receiver terminal 702 makes registration with the SIP server 700 after the forwarding of the 3XX, 4XX, 5XX, or 6XX response to the caller terminal 701. To solve this problem, the process at step S1006 in Fig. 10 may be so modified that when receiving the 3XX, 4XX, 5XX, or 6XX response from the S-P gateway 704, the SIP server 700 forwards the 3XX, 4XX, 5XX, or 6XX response to the caller terminal 701 with a condition that the SIP server 700 receives no REGISTER request from the call receiver terminal 702 for a given time, i.e., the SIP server 700 does not send a notice of connection failure immediately to the caller terminal 701 when receiving the notice from the S-P gateway 704, but waits for the given time for registration access from the call receiver terminal 702.

According to the second embodiment described above, in the case as shown in Fig. 7, a call from the S-P gateway 704 through the route segment (3) is terminated before the call receiver terminal 702 responds to the call. As a result, no call charge is incurred for any of the routes (1) to (10). The communication route follows the dotted line arrow shown in Fig. 20, which eliminates a call charge for the call between the S-P gateway 2004 and the call receiver terminal 2002, compared to the solid line arrow representing a conventional communication route. On the other hand, in the case shown in Fig. 8, the communication route follows the solid line arrow shown in Fig. 20. As in the case where a call from an IP terminal to a main number is forwarded to a non-IP terminal in the ubiquitous IP telephone system mentioned before, a call charge is incurred by the caller for the call between the S-P gateway and the call receiver terminal 2002.

The REGISTER request transmitted from the call receiver terminal 702 to the SIP server 700, as shown in Fig. 7, is originally a request for SIP registration. In the second embodiment, this request is regarded as a kind of connection request, i.e., a request from the call receiver terminal 702 for connecting the call receiver terminal 702 to the caller terminal 701 via the IP network. The operation of the SIP server 700, therefore, can be described in such a way that the SIP server 700 re-forwards a call, which has been forwarded once via the PSTN, via the IP network in response to the above request. In other words, the above connection request does not necessarily have to be the REGISTER request from the call receiver terminal 702, but may be a notice of any form indicating that the call receiver terminal 702 is ready for receiving an incoming call through the WLAN unit (and also does not necessarily have to be a notice from the call receiver terminal 702 itself).

### (Third Embodiment)

### (Reconnection plus Call-again Method)

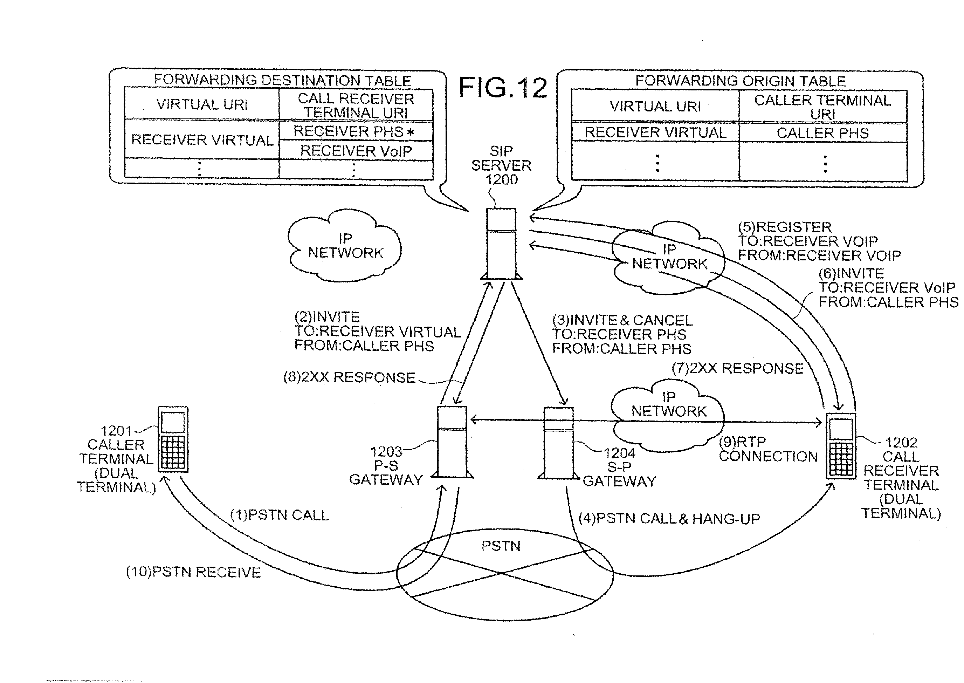

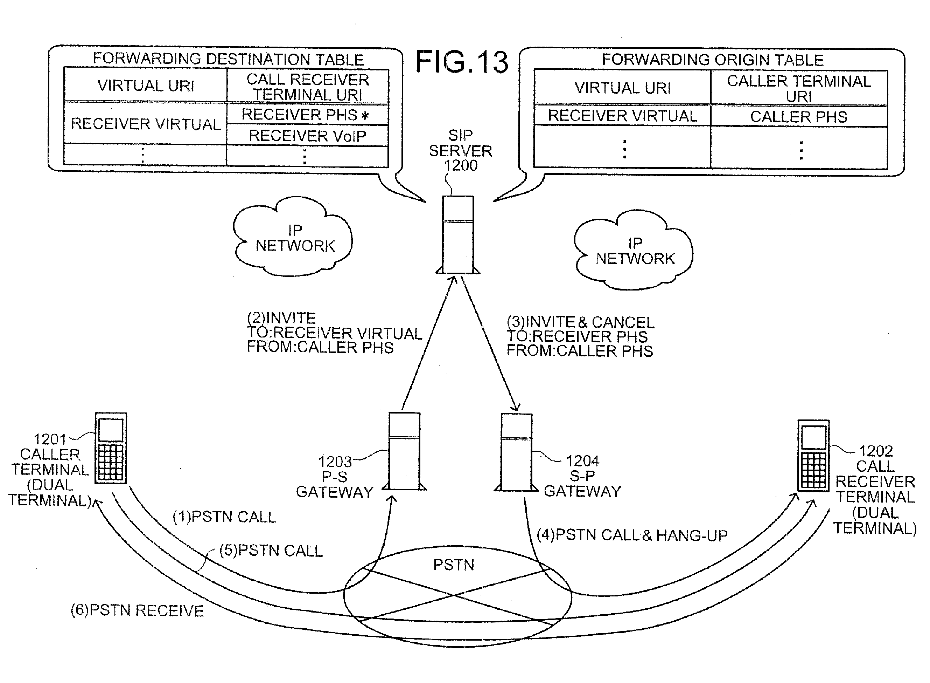

Figs. 12 and 13 are overviews of a "reconnection plus call-again method" implemented by a communication relay apparatus according to a third embodiment of the present invention. The above second embodiment relates to a case where a call is made from an IP terminal (e.g., IP phone). In contrast, the third embodiment relates to a case where a call is made from a non-IP terminal, specifically a conventional telephone, a dual terminal situated outside a WLAN service area, etc. In such a case, when the caller terminal 2001 makes a call via the PSTN and the call receiver terminal 2002 receives the call also via the PSTN, a double call charge results, which consist of a call charge for a call between the caller terminal 2001 and the P-S gateway 2003, and a call charge for a call between the S-P gateway 2004 and the call receiver terminal 2002.

According to the third embodiment, as shown in Figs. 12 and 13, when a caller terminal 1201 makes a call via the PSTN ((1) in Fig . 12), causing an INVITE request to be forwarded from a P-S gateway 1203 through an SIP server 1200 to an S-P gateway 1204 ((2) and (3) in Fig. 12), and the S-P gateway 1204 makes a call via the PSTN ((4) in Fig. 12), the SIP server 1200 transmits a CANCEL request to the S-P gateway 1204 right after the forwarding of the INVITE request ((3) in Fig. 12). This terminates the call from the S-P gateway 1204 to a call receiver terminal 1202 before a call charge is incurred, specifically, after one dial tone or so ((4) in Fig. 12).

When the call receiver terminal 1202 selects the WLAN unit as a communication unit, the call receiver terminal 1202 transmits a REGISTER request to the SIP server 1200, as shown in Fig. 12 ((5) in Fig. 12). When the type of the REGISTER request is not "ordinary", the SIP server 1200 replaces the address of the INVITE request receiving from the P-S gateway 1203 ((2) in Fig. 12) with an SIP URI, which the call receiver terminal 1202 has registered its IP address ((5) in Fig. 12), and forwards the INVITE request ((6) IN Fig. 12).

Receiving a 2XX response from the call receiver terminal 1202 ((7) in Fig. 12), the SIP server 1200 forwards the 2XX response to the P-S gateway 1203 ((8) in Fig. 12), after which, following the forwarding of an ACK request, RTP connection is established between the P-S gateway 1203 3 and the call receiver terminal 1202 ((9) in Fig. 12). Subsequently, the P-S gateway 1203 sends a response signal to the caller terminal 1201 via the PSTN ((10) in Fig. 12).

When the call receiver terminal 1202 selects the PHS unit as a communication unit, the call receiver terminal 1202 waits for a call from the caller terminal 1201 (takes no action) after receiving a call from the S-P gateway 1204 ((4) in Fig. 13). The call receiver terminal 1202 cannot be in time for responding to the call from the S-P gateway 1204 through the PHS unit because the call is terminated through one dial tone disconnection, and cannot or does not use the WLAN unit. The call receiver terminal 1202, therefore, has no option but to call back to the S-P gateway 1204 through the PHS unit. However, when an INVITE request is forwarded from the S-P gateway 1204 through the SIP server 1200 to the P-S gateway 1203 and the P-S gateway 1203 makes a call to the caller terminal 1201 via the PSTN, the above problem of double charge results.

To avoid this, according to the third embodiment, the caller terminal 1201 automatically makes a call again while the call receiver terminal 1202 takes no action. Specifically, when a call to the main number of a call receiver does not get through in a given period of time (no response signal is sent back from the P-S gateway 1203 within the given period of time), the caller terminal 1201 according to the third embodiment selects one of the phone numbers other than the main number of the call receiver and again calls the selected number. The other phone numbers may be stored in advance in the caller terminal 1201, or obtained in real time from the SIP server 1200, etc.

When a PHS number of the dual terminal is included in the other phone numbers, the call receiver terminal 1202 receives a direct call from the caller terminal 1201 ((5) in Fig. 13) a few moments after the reception of the call from the S-P gateway 1204. Then, after the call receiver terminal 1202 sends a response signal in return to the caller terminal 1201 ((6) in Fig. 13), an ordinary PHS call starts.

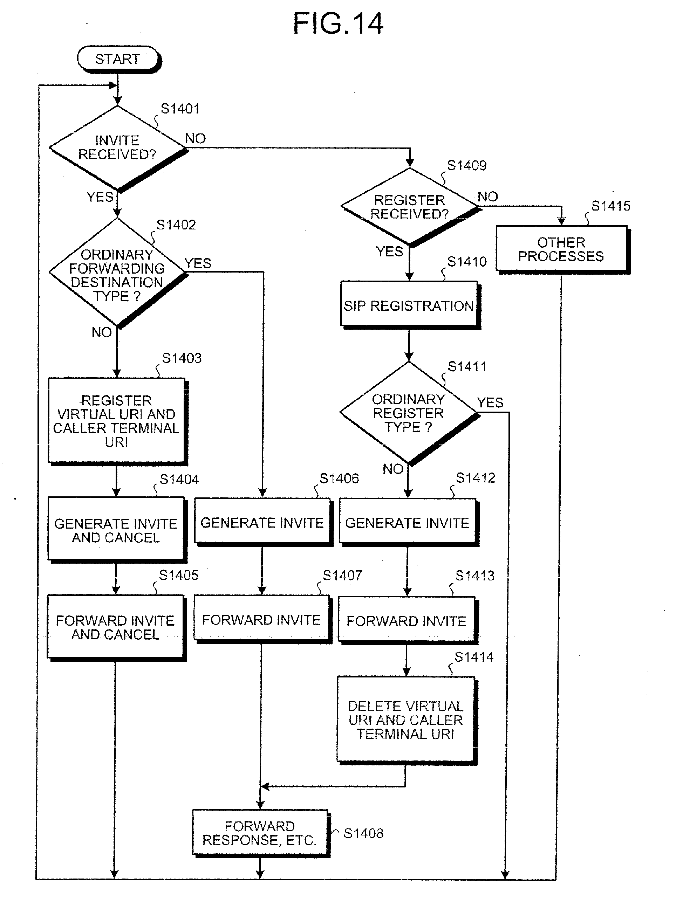

The hardware configuration of the communication relay apparatus according to the third embodiment of the present invention (specifically the SIP server 1200 shown in Figs. 12 and 13) is the same as the hardware configuration of the communication relay apparatus according to the first embodiment shown in Fig. 3. The description of hardware configuration of the communication relay apparatus of the third embodiment, therefore, is omitted. The functional configuration of the apparatus of the third embodiment is substantially the same as the functional configuration of the apparatus according to the second embodiment shown in Fig. 9. Different aspects between both functional configurations will be described according to the flowchart shown in Fig. 14.

Fig. 14 is a flowchart of various request processes performed by the communication relay apparatus. The flowchart shown in Fig. 14 is different from the flowchart of the second embodiment shown in Fig. 10. As shown in Fig. 10, a CANCEL request generation and forwarding process is within a loop of processes executed upon receipt of a REGISTER request (steps S1010 and S1011). On the other hand, as shown in Fig. 14, the CANCEL request generation and forwarding process is within a loop of processes executed upon reception of an INVITE request triggering the REGISTER request (steps S1404 and S1405). When the SIP server 1200 receives a request other than an INVITE request and REGISTER request, the SIP server 1200 executes another process corresponding to the received request (step S1401: NO, S1409: NO, and step S1415).

When the type of the selected URI identified by the forwarding-destination-type identifying unit 903a is not "ordinary" with respect to an INVITE request received by the SIP server 1200, the request generating unit 904 according to the third embodiment generates two requests consisting of an INVITE request and a CANCEL request that are addressed to the selected URI, and the proxy 902 forwards the generated requests in sequence (steps S1401 to S1405). When the type of the selected URI is "ordinary", the request generating unit 904 generates an INVITE request addressed to the selected URI, which is forwarded by the proxy 902, and then the proxy 902 executes the usual process that follows the INVITE request forwarding, processes including the forwarding of a response and ACK request (steps S1401 and S1402, and S1406 to S1408).

When the type of the REGISTER request identified by the register-type identifying unit 906a is not "ordinary" with respect to a REGISTER request received by the SIP server 1200, the request generating unit 904 according to the third embodiment generates an INVITE request addressed to an SIP URI with which an IP address is registered, which INVITE request is forwarded by the proxy 902 to the call receiver terminal 1202 (steps S1409 to S1414).

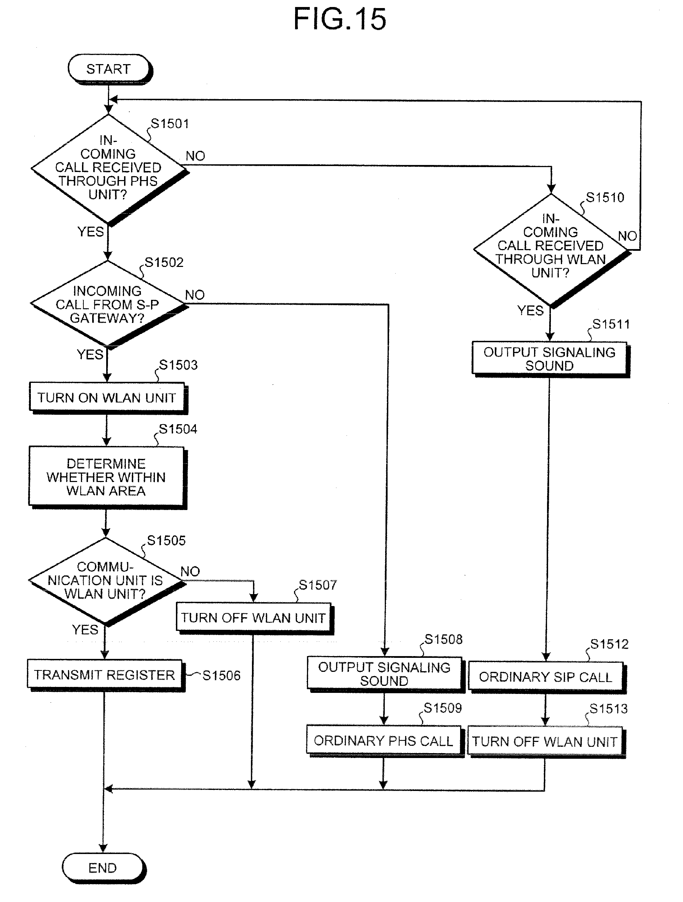

Fig. 15 is a flowchart of a call receiving process performed by the call receiver terminal 1202 according to the third embodiment of the present invention. The process at each of steps S1501 to S1513 is the same as the process at each of steps S1101 to S1113 shown in Fig. 11. According to the third embodiment, however, a call from the P-S gateway 1204 is terminated to make a PHS call impossible at the point that the call receiver terminal 1202 selects the PHS unit as a communication unit and turns off the WLAN unit (step S1505: NO; step S1507). Following step S1507, the process flow returns to step S1501.

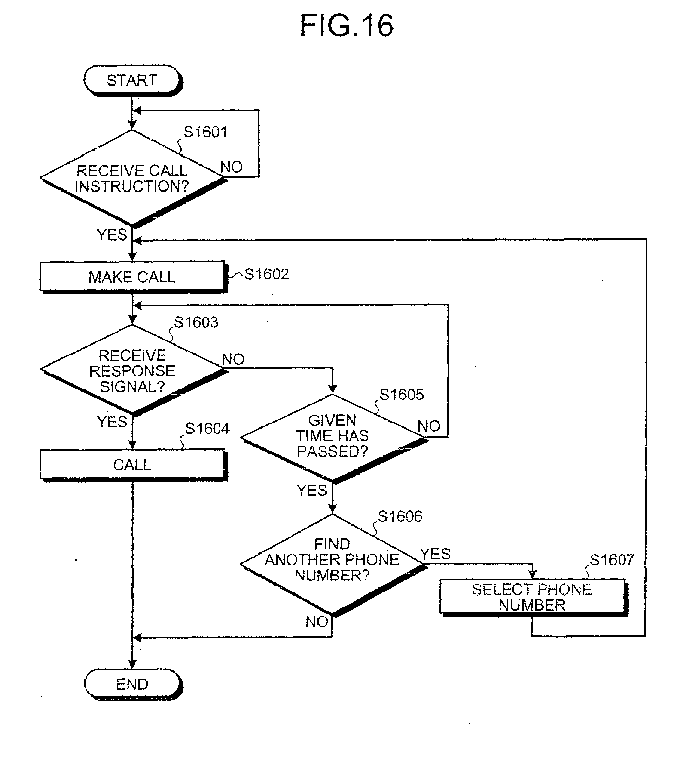

Fig. 16 is a flowchart of a call receiving process performed by the caller terminal 1201 according to the third embodiment of the present invention. When receiving an instruction from a caller about calling to a specific phone number, e.g., to the main number of a call receiver (step S1601: YES), the caller terminal 1201 makes a call to the main number via the PSTN (step S1602). The call is turned into an INVITE request at the P-S gateway 1203, and is forwarded to the SIP server 1200. The SIP server 1200 then sends 2XX response in return to the P-S gateway 1203, which sends a response signal to the caller terminal 1201 (step S1603: YES), after which an ordinary voice call starts (step S1604).

The caller terminal 1201 waits, for a given period of time from the point of making the call, for the response signal (step S1603: NO, S1605: NO). When the caller terminal 1201 receives no response from the P-S gateway 1203 after the passage of the given period of time (step S1603: NO, step S1605: YES), and if the call receiver has other phone numbers that have not yet been called (step S1606: YES), the caller terminal 1201 selects one phone number out of the other phone numbers (step S1607) to call as the selected number (step S1602). When calling every phone number of the call receiver still brings no response (step S1606: NO), the process comes to an end at that point.

The following description is made with reference to Figs. 12 and 13 and Figs. 14 to 16. In the case as shown in Fig. 12, the SIP server 1200, without waiting for the REGISTER request from the call receiver terminal 1202, cancels the INVITE request, which triggers a REGISTER request (steps S1401 to S1405 in Fig. 14). When receiving a REGISTER request from the call receiver terminal 1202 (steps S1501 to S1506 in Fig. 15), the SIP server 1200 forwards an INVITE request from the caller terminal 1201 to an SIP URI with which an IP address is registered (steps S1409 to S1414 in Fig. 14).

On the other hand, in the case as shown in Fig. 13, the SIP server 1200 cancels the INVITE request (steps S1401 to 1405 in Fig. 14), which results in the passage of the given period of time without a response signal from the P-S gateway 1203. The caller terminal 1201, therefore, selects another phone number of the call receiver, e.g., a PHS number of the dual terminal, and again makes a call to the selected number (steps S1601 to S1607 in Fig. 16).

According to the third embodiment as described above, in both cases shown in Figs. 12 and 13, a call connected through the route represented by the continuous line shown in Fig. 21 is always terminated through one dial tone disconnection (disconnection before a call charge is incurred) under the control of the SIP server 1200, thereby preventing the double charge.

Under the present circumstances, however, places available for the use of the WLAN unit are limited compared to places available for the use of the PHS unit, and the dual terminal is still in the early stage of popular use. For this reason, in an actual situation, calling back by the caller terminal 1201 as shown in Fig. 13 is assumed to be a dominant case rather than reconnection by the SIP server 1200 as shown in Fig. 12. Also, in the case shown in Fig. 13, eliminating the route segments (3) and (4) causes no particular difficulty. Thus, "reconnection plus call-again method" of the third embodiment may be simplified into a "reconnection method" of a fourth embodiment, which is herein described.

### (Fourth Embodiment)

### (Call-again Method)

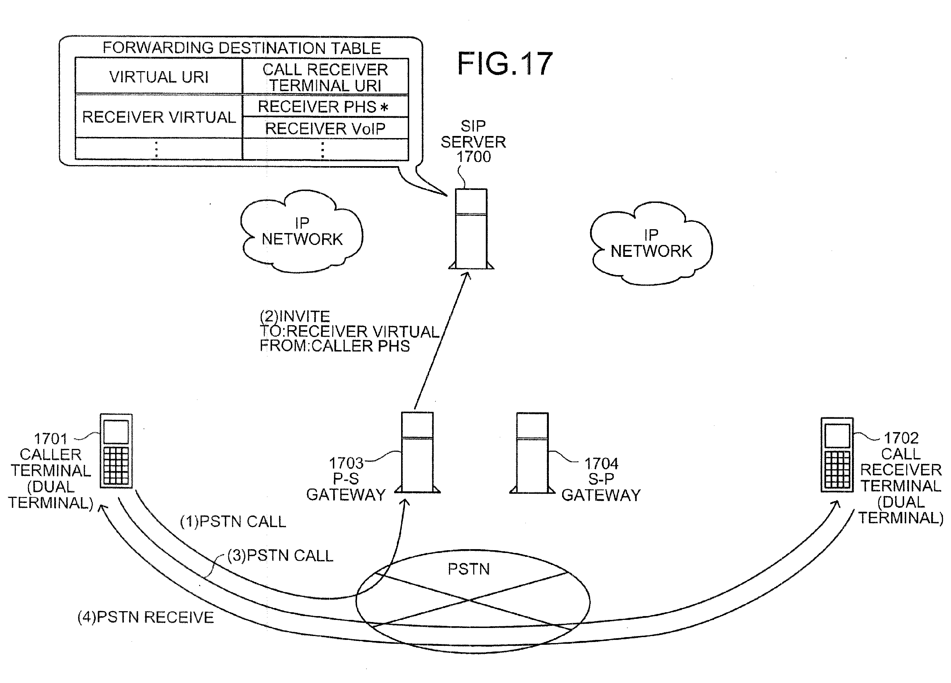

Fig. 17 is an overview of a "call-again method" implemented by a communication relay apparatus according to a fourth embodiment of the present invention. According to the fourth embodiment as shown in Fig. 17, an SIP server 1700 discards an INVITE request causing a double charge, specifically, the INVITE request to be forwarded from a P-S gateway 1703 trough the SIP server 1700 to an S-P gateway 1704 ((2) in Fig. 17), thus not forwarding the INVITE request further ahead. As a result, a caller terminal 1701 receives no response signal from the P-S gateway 1703 after the passage of a given period of time from the point of calling. The caller terminal 1701 thus selects another phone number of a call receiver, e.g., a PHS number of the dual terminal, to call again as the selected number ((3) in Fig. 17). After the call receiver terminal 1701 receives a response signal from a call receiver terminal 1702 ((4) in Fig. 17), an ordinary PHS call starts.

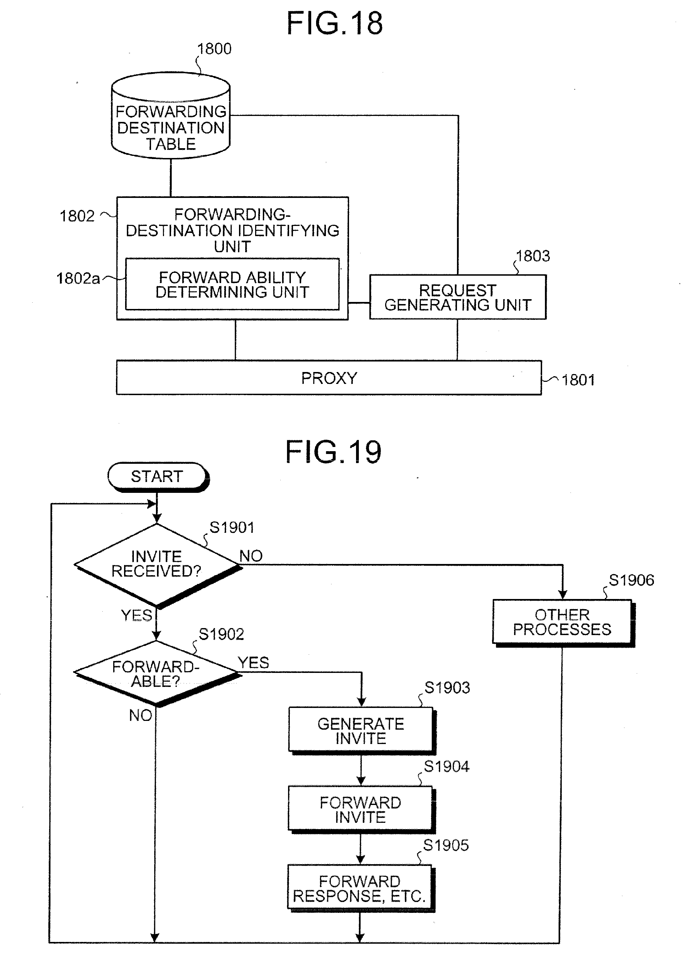

The hardware configuration of the communication relay apparatus according to the fourth embodiment of the present invention (specifically the SIP server 1700 shown in Fig. 17) is the same as the hardware configuration of the communication relay apparatus according to the first embodiment shown in Fig. 3. The description of hardware configuration of the communication relay apparatus of the fourth embodiment, therefore, is omitted. Fig. 18 illustrates a functional configuration of the communication relay apparatus. Fig. 19 is a flowchart of various request processes performed by the communication relay apparatus. The function of each unit shown in Fig. 18 is described according to the flowchart shown in Fig. 19.

When a proxy 1801 of the SIP server 1700 receives an INVITE request (step S1901: YES), the INVITE request is sent to a forwarding-destination identifying unit 1802, where a forward-ability determining unit 1802a of the forwarding-destination identifying unit 1802 refers to a forwarding destination table 1800 to determine whether the INVITE request is can be forwarded (step S1902). Specifically, when an INVITE request to be forwarded to the S-P gateway 1704 carries SIP URI's each signifying a phone number (identifier on the PSTN), the SIP URI's being written in the "To" header and "From" header of the INVITE request, i.e., when the INVITE request is to be forwarded via the PSTN on the route before and after the SIP server 1700, the INVITE request is determined to be not forward-able, otherwise, the INVITE request is determined to be forward-able.

When the INVITE request is determined to be not forward-able (step S1902: NO), the process flow returns to step S1901, at which point the SIP server 1700 waits for another request. When the INVITE request is determined to be forward-able (step S1902: YES), the request generating unit 1803 replaces the address of the INVITE request with a selected URI from the forwarding destination table 1800 to generate an INVITE request addressed to the selected URI (step S1903). The proxy 1801 then forwards the generated INVITE request (step S1904), after which the proxy 1801 executes the usual processes that follow INVITE request forwarding, processes including the forwarding of a response and ACK request (step S1905).

When receiving a request other than the INVITE request (step S1901: NO), the SIP server 1700 executes another process corresponding to the received request (step S1906).

The call receiver terminal 1702 according to the fourth embodiment may be any device, provided the device is capable of receiving a call via the PSTN, and processes executed by the call receiver terminal 1702 are the same as processes required in a conventional technique. The caller terminal 1701 according to the fourth embodiment may be any device if the device is capable making a call via the PSTN provided that the caller terminal 1701 of the fourth embodiment has a function of calling again another phone number, as the caller terminal 1201 of the third embodiment does, when the original call cannot get through for a given period of time according to the procedure shown in Fig. 16.

According to the fourth embodiment as described above, an INVITE request, which causes a double charge when forwarded, cannot proceed beyond the SIP server 1700, and the caller terminal 1701 calls again through a route different from the original route. As a result, the double charge is not incurred. In more general terms, when a relatively expensive route A and a relatively inexpensive route B are present, a call via route A is discarded somewhere along route A (e.g., at the SIP server 1700 as in the fourth embodiment), and then a call is made again via route B, thereby ensuring that a communication route that is finally established upon connection of the call is always the least expensive.

The above conclusion is given on the assumption that a call made through the route represented by the solid line arrow is more expensive than a call made through the route represented by the dotted line arrow in Fig. 21. However, a different combination of the caller terminal 2001 and the call receiver terminal 2002 generates a different set of call charges, which may lead to a case where a call charge on the solid line arrow route is lower than a call charge on the dotted line arrow route even if a double charge does result. In such a case, for example, when the caller terminal 2001 makes a call through the dotted line arrow route, the call receiver terminal 2002 may refuse to receive the call, causing the caller terminal 2001 to make a call again through the solid line arrow route.

The above first and second embodiments are described on the assumption that the caller terminals 101 and 701 are IP terminals, and the third and fourth embodiments are described on the assumption that the caller terminals 1201 and 1701 are non-IP terminals. INVITE requests received by the SIP server, however, are actually a mix of (a) an INVITE request transmitted by the caller terminal itself, and (b) an INVITE request forwarded from the P-S gateway, in which the INVITE request is a result of conversion of a call from the caller terminal into the INVITE request.

In practical application, for example, an SIP server combining the function of the SIP server 700 of the second embodiment and that of the SIP server 1200 of the third embodiment is provided. This server executes the procedures shown in Fig. 10 when receiving the INVITE request of (a) above, and executes the procedure of Fig. 14 when receiving the INVITE request of (b) above. In another case, an SIP server combining the function of the SIP server 100 of the first embodiment and that of the SIP server 1700 of the fourth embodiment is provided. This server executes the procedures shown in Fig. 5 when receiving the INVITE request of (a) above, and executes the procedures shown in Fig. 19 when receiving the INVITE request of (b) above.

### INDUSTRIAL APPLICABILITY

As described above, the communication relay method, the communication relay program, and the communication relay apparatus according to the present invention are useful in selecting an optimum communication route when a plurality of communication routes are present between a caller terminal and a call receiver terminal. The communication relay method, communication relay program, and communication relay apparatus are particularly applicable to a case where a relatively inexpensive communication route is virtually out of service for some reason (e.g., power saving).

## Claims

1. A communication relay method of relaying communication between a first calling device and a second calling device, comprising:
forwarding a first connection request from the first calling device to the second calling device;
canceling the forwarded first connection request;
receiving a second connection request from the second calling device that has received the first connection request; and
forwarding the second connection request to the first calling device.

2. A communication relay method of relaying communication between a first calling device and a second calling device capable of connecting to a plurality of networks, comprising:
forwarding a first connection request from the first calling device to the second calling device through a first network;
receiving, through a second network, a second connection request from the second calling device that has received the first connection request; and
forwarding the first connection request to the second calling device through the second network when the second connection request is received at the receiving.

3. A communication relay method of relaying communication between a first calling device and a second calling device, comprising:
forwarding a first connection request received from the first calling device through a network, to the second calling device through the network;
canceling the forwarded first connection request;
receiving a second connection request from the second calling device that has received the first connection request; and
forwarding the second connection request to the first calling device.

4. A communication relay method of relaying communication between a first calling device and a second calling device, comprising:
receiving a connection request from the first calling device through a first network;
identifying a second network through which the connection request is to be forwarded; and
forwarding the connection request to the second calling device through the second network when the first network and the second network are different.

5. The communication relay method according to claim 3 or 4, further comprising:
transmitting, by the first calling device, another connection request to another address that is different from an address of the connection request when failing to connect to the second calling device within a period of time from the connection request.

6. A communication relay program for relaying communication between a first calling device and a second calling device, wherein the program causes a computer to execute:
forwarding a first connection request from the first calling device to the second calling device;
canceling the forwarded first connection request;
receiving a second connection request from the second calling device that has received the first connection request; and
forwarding the second connection request to the first calling device.

7. A communication relay program for relaying communication between a first calling device and a second calling device capable of connecting to a plurality of networks, wherein the program causes a computer to execute:
forwarding a first connection request from the first calling device to the second calling device through a first network;
receiving, through a second network, a second connection request from the second calling device that has received the first connection request; and
forwarding the first connection request to the second calling device through the second network when the second connection request is received at the receiving.

8. A communication relay program for relaying communication between a first calling device and a second calling device, wherein the program causes a computer to execute:
forwarding a first connection request received from the first calling device through a network, to the second calling device through the network;
canceling the forwarded first connection request;
receiving a second connection request from the second calling device that has received the first connection request; and
forwarding the second connection request to the first calling device.

9. A communication relay program for relaying communication between a first calling device and a second calling device, wherein the program causes a computer to execute:
receiving a connection request from the first calling device through a first network;
identifying a second network through which the connection request is to be forwarded; and
forwarding the connection request to the second calling device through the second network when the first network and the second network are different.

10. The communication relay program according to claim 8 or 9, further causing the computer to execute:
transmitting, by the first calling device, another connection request to another address that is different from an address of the connection request when failing to connect to the second calling device within a period of time from the connection request.

11. A communication relay apparatus that relays communication between a first calling device and a second calling device, comprising:
a first forwarding unit that forwards a first connection request from the first calling device to the second calling device;
a canceling unit that cancels the forwarded first connection request;
a receiving unit that receives a second connection request from the second calling device that has received the first connection request; and
a second forwarding unit that forwards the second connection request to the first calling device.

12. A communication relay apparatus that relays communication between a first calling device and a second calling device capable of connecting to a plurality of networks, comprising:
a first forwarding unit that forwards a first connection request from the first calling device to the second calling device through a first network;
a receiving unit that receives, through a second network, a second connection request from the second calling device that has received the first connection request; and
a forwarding unit that forwards the first connection request to the second calling device through the second network when the second connection request is received by the receiving unit.

13. A communication relay apparatus that relays communication between a first calling device and a second calling device, comprising:
a first forwarding unit that forwards a first connection request received from the first calling device through a network, to the second calling device through the network;
a canceling unit that cancels the forwarded first connection request;
a receiving unit that receives a second connection request from the second calling device that has received the first connection request; and
a second forwarding unit that forwards the second connection request to the first calling device.

14. A communication relay apparatus that relays communication between a first calling device and a second calling device, comprising:
a receiving unit that receives a connection request from the first calling device through a first network;
an identifying unit that identifies a second network through which the connection request is to be forwarded; and
a forwarding unit that forwards the connection request to the second calling device through the second network when the first network and the second network are different.

15. The communication relay apparatus according to claim 13 or 14, further comprising:
a transmitting unit that transmits, by the first calling device, another connection request to another address that is different from an address of the connection request when failing to connect to the second calling device within a period of time from the connection request.
